# FASCICULE DE BREVET EUROPEEN

(11) **EP 1 873 073 B1**
(45) Date de publication et mention de la délivrance du brevet: **08.08.2012**
(21) Numéro de dépôt: 07111172.8
(22) Date de dépôt: 27.06.2007
(51) Int. Cl.: B65D 33/25, A44B 19/16

(54) **Dispositif de fermeture perfectionné à barrière d'étanchéité pour sachets refermables**
Perfektionierte Verschließvorrichtung mit Abdichtungsbarriere für wiederverschließbare Beutel
Improved closing device with sealing barrier for resealable bags

(30) Priorité: 29.06.2006 FR 0605874
(43) Date de publication de la demande: 02.01.2008
(73) Titulaire: S2F FLEXICO, 60119 Henonville (FR)
(72) Inventeur: Bois, Henri, 92200 Neuilly-sur-Seine (FR); Buygnet, Stephen, 80700 Bus-la-Mesiére (FR)
(74) Mandataire: Texier, Christian

(56) Documents cités:
- EP-A- 0 945 359
- EP-A- 1 164 087
- JP-A- 2001 130 595
- JP-A- 2003 261 152
- US-A1- 2006 029 300
- US-B1- 6 182 337

## Description

La présente invention concerne le domaine des sachets refermables comprenant, sur leur embouchure, des dispositifs de fermeture conçus pour permettre de multi-ouvertures/fermetures successives à la demande.

De nombreux types de dispositifs de fermeture à cette fin ont déjà été proposés.

En particulier, on a proposé de nombreuses configurations de dispositifs de fermeture à base de deux éléments profilés mâle/femelle complémentaires, ou encore à base de crochets complémentaires ou de velours/crochets complémentaires.

On a également proposé de nombreux dispositifs de fermeture destinés à être actionnés à l'aide d'un curseur. L'homme de l'art sait que l'utilisation de tels curseurs facilite la manipulation, tant à l'ouverture, qu'à la fermeture, de tels dispositifs.

Sans être limitée à cette utilisation, la présente invention s'applique également aux dispositifs de fermeture comportant un tel curseur.

On a par ailleurs proposé différents dispositifs de fermeture comprenant en plus d'éléments complémentaires de fermeture, un élément dit "d'inviolabilité", c'est-à-dire un élément conçu pour servir de témoin de première ouverture d'un sachet. Généralement un tel élément d'inviolabilité est constitué de moyens, susceptibles de rupture, assurant une liaison provisoire entre deux supports des éléments complémentaires de fermeture. Il assure également le plus souvent l'étanchéité initiale du sachet.

Le document EP-A-1164087 divulgue un exemple d'un tel ensemble de fermeture comprenant un témoin d'ouverture formé d'un voile placé à côté de profilés de fermeture complémentaires en crochet et comportant une pluralité de points de rupture.

Le document US-A-2006/029300 divulgue un exemple d'ensemble de fermeture comprenant un témoin d'ouverture par collage localisé de deux voiles support.

Le document JP-A-2003/261152 divulgue un exemple d'ensemble de fermeture dans lequel un témoin d'ouverture est formé par soudure localisée' de deux voiles support.

Dans ce contexte, la présente invention a maintenant pour objectif de proposer de nouveaux moyens permettant d'améliorer les performances de dispositifs de fermeture.

Ce but est atteint dans le cadre de la présente invention grâce à un dispositif de fermeture pour sachets du type défini en revendication 1 annexée.

La présente invention concerne également les sachets équipés de tels dispositifs de fermeture.

D'autres caractéristiques, buts et avantages de la présente invention apparaîtront à la lecture de la description détaillée qui va suivre, et en regard des dessins annexés, donnés à titre d'exemples non limitatifs et sur lesquels :
- la figure 1 représente une vue en coupe transversale d'un dispositif de fermeture conforme à la présente invention, et
- la figure 2 représente le dispositif de la figure 1 en sortie de filière d'extrusion.

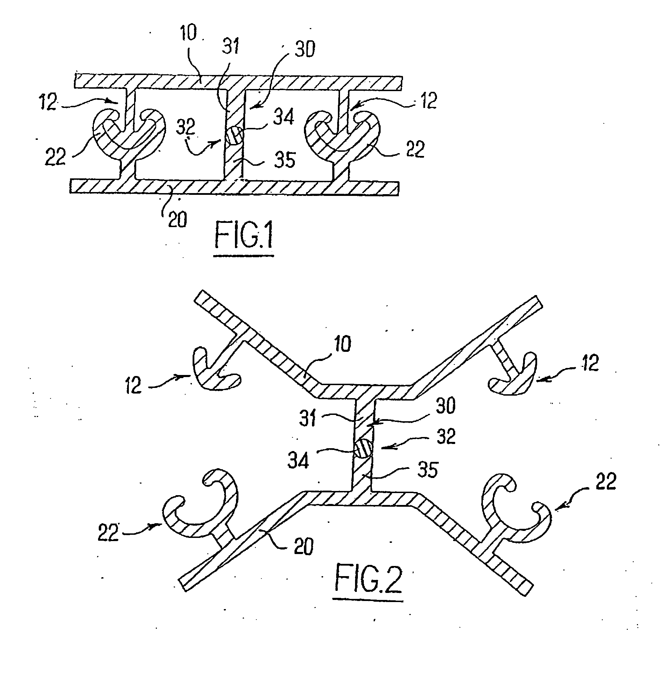

On aperçoit sur la figure 1 annexée, un dispositif de fermeture comprenant deux voiles 10, 20. Deux paires d'éléments de fermeture complémentaires 12, 22, sont portés respectivement par les faces internes en regard des voiles 10, 20. Selon le mode de réalisation particulier représenté sur la figure 1, les éléments de fermeture complémentaires 12, 22 sont formés d'éléments mâle/femelle complémentaires. La structure générale de tels éléments de fermeture complémentaires de type mâle et femelle est bien connue de l'homme de l'art. Elle ne sera donc pas décrite dans le détail par la suite.

Bien entendu la présente invention n'est pas limitée à l'utilisation de tels éléments mâle/femelle complémentaires mais s'étend à l'utilisation de tout moyen fonctionnellement équivalent, par exemple tout moyen à base de crochets ou de système velours/crochets.

Les deux voiles 10, 20 sont généralement parallèles entre eux.

Le dispositif de fermeture illustré sur la figure 1 annexée, comprend également une tige 30 venue d'extrusion avec les deux voiles support 10, 20. Ainsi, la tige 30 s'étend globalement perpendiculairement aux voiles support 10, 20, elle assure une liaison étanche entre ceux-ci.

Le dispositif de fermeture représenté sur les figures 1 et 2 annexées peut être formé d'un élément initialement distinct d'un film composant un sachet et rapporté puis fixé sur celui-ci par tout moyen de liaison approprié, de préférence par soudure thermique. En variante, le dispositif de fermeture illustré sur les figures 1 et 2 annexées, peut être venu d'extrusion directement sur un film composant un sachet.

On aperçoit sur la figure 1 que la tige 30 est placée entre deux paires d'éléments de fermeture complémentaires 12, 22.

Comme on l'a évoqué précédemment, selon une caractéristique essentielle de l'invention, la tige 30 comporte une zone de faiblesse 32 définie par un changement local de matière. La zone de faiblesse 32 est longitudinale. C'est-à-dire qu'elle s'étend tout le long de la fermeture. La zone 32 peut être définie par une interface simple entre deux matériaux différents présentant une adhérence limitée. Dans ce cas, la tige 30 comprend deux tronçons réalisés en des matériaux différents. Et la zone de faiblesse est définie par l'interface entre ces deux tronçons. Cependant, de préférence, comme on l'a représenté sur les figures annexées, la zone de faiblesse 32 est formée par une bande 34 formée en un matériau différent des deux tronçons 31, 35 de la tige 30, qui l'encadrent.

Selon une autre caractéristique avantageuse de la présente invention, la zone de faiblesse 32 est placée à mi-largeur de la tige 30, c'est-à-dire à égale distance des deux voiles support 10, 20. La bande 32 a de préférence la même épaisseur que les autres tronçons 31, 35 de la tige 30.

On a représenté sur la figure 2, un mode de réalisation préférentiel de ce dispositif de fermeture, par extrusion à l'état séparé des deux paires d'éléments de fermeture 12, 22 respectivement mâle et femelle. Ces modalités d'extrusion que l'on comprend à l'examen comparé des figures 1 et 2, consistent à extruder les tronçons des voiles 10, 20 qui portent les éléments de fermeture 12, 22 dans une position provisoire, divergente différente de la position parallèle occupée, à l'utilisation, par ces tronçons. Elles requièrent un pivotement ultérieur des tronçons des voiles 10, 20 qui portent les éléments de fermeture 12, 22 pour rendre ces tronçons, non parallèles en sortie d'extrusion, comme on le voit sur la figure 2, en position parallèle d'utilisation pour autoriser la mise en prise des éléments 12, 22 comme on le voit sur la figure 1.

L'homme de l'art comprendra que l'extrusion des éléments 12, 22 en position totalement séparée comme illustré sur la figure 2 permet d'améliorer la facilité et la fiabilité d'extrusion des éléments 12, 22 ainsi que la phase de refroidissement ultérieure.

Dans le cadre de la présente invention, la bande 34 formant zone de faiblesse en partie médiane de la tige 30 est formée de préférence en un matériau présentant un point de fusion différent des tronçons 31, 35 de la tige 30 qui l'encadrent. Plus précisément encore, de préférence dans le cadre de la présente invention, la zone de faiblesse 32 est réalisée en un matériau présentant un point de fusion supérieur à celui des tronçons 31, 35 qui l'encadrent.

Comme on l'a évoqué précédemment, la zone de faiblesse 32 peut être formée par une simple interface entre deux matériaux différents. Dans ce cas, le tronçon 31 de la tige 30 adjacent au voile support 10 est formé de préférence de polyéthylène basse densité, comme les voiles support 10, 20 et les éléments de fermeture 12, 22 tandis que le complément de la tige 30 définissant le changement de matière est réalisé de préférence en polyéthylène haute densité ou polypropylène.

Dans le cas où comme illustré sur les figures annexées, la tige 30 comprend une zone de faiblesse 32 formée par une bande de matière présentant un point de fusion élevé, de préférence les tronçons 31, 35 de la tige sont avantageusement réalisés en polyéthylène basse densité, comme les voiles 10, 20 et les éléments de fermeture 12, 22, tandis que la bande 34 formant zone de faiblesse est réalisée en polyéthylène haute densité ou polypropylène.

Bien entendu la présente invention n'est pas limitée aux modes de réalisation particuliers qui viennent d'être décrits mais s'étend à toute variante conforme à son esprit.

L'homme de l'art comprendra qu'il suffit de séparer la première paire d'éléments de fermeture complémentaires 12, 22 située à l'extérieur du sachet puis de rompre la tige 30 par déchirure de la zone de faiblesse longitudinale 32 pour accéder au contenu du sachet.

## Revendications

1. Dispositif de fermeture pour sachets comprenant deux voiles support (10, 20), au moins deux éléments de fermeture (12, 22) complémentaires portés respectivement par les voiles (10, 20) et susceptibles de venir en prise en position de fermeture ou d'être séparées en position d'ouverture et des moyens (30) de liaison susceptibles de rupture, reliant initialement les deux voiles (10, 20), **caractérisé par le fait que** les moyens de liaison (30) sont formés par une tige venue d'extrusion avec les deux voiles (10, 20) et comportant sur une zone contrôlée un changement de matière (32) propre à définir une zone de faiblesse, une paire d'éléments de fermeture (12, 22) se trouvant respectivement de chaque côté de ladite tige.

2. Dispositif selon la revendication 1, **caractérisé par le fait qu'**il est extrudé en position séparée des éléments de fermeture (12, 22), les tronçons (10, 20) des voiles portant ces éléments de fermeture (12, 22) étant ultérieurement pivotés pour porter les éléments de fermeture (12, 22) en prise.

3. Dispositif selon l'une des revendications 1 ou 2, **caractérisé par le fait que** la zone de faiblesse (32) est définie par l'interface entre deux matériaux (31, 34 ; 34, 35).

4. Dispositif selon l'une des revendications 1 à 3, **caractérisé par le fait que** la zone de faiblesse (32) est définie par au moins une interface de deux matériaux (31, 34 ; 34, 35) présentant dés points de fusion différents.

5. Dispositif selon l'une des revendications 1 à 4, **caractérisé par le fait que** la zone de faiblesse (32) est définie par une bande de matériau (34) encadrée par deux tronçons (31, 35) de matériaux différents.

6. Dispositif selon l'une des revendications 1 à 5, **caractérisé par le fait que** la zone de faiblesse (32) est formée par une bande (34) de matériau présentant un point de fusion supérieur à celui de tronçons (31, 35) encadrant cette bande.

7. Dispositif selon l'une des revendications 1 à 6, **caractérisé par le fait que** la zone de faiblesse (32) est formée par une bande de matériau choisi dans le groupe comprenant le polyéthylène haute densité et le polypropylène.

8. Dispositif selon l'une des revendications 1 à 7, **caractérisé par le fait que** la zone de faiblesse (32) est située sensiblement à mi-largeur de la tige (30).

9. Dispositif selon l'une des revendications 1 à 8, **caractérisé par le fait que** la tige comprend un tronçon de polyéthylène basse densité.

10. Dispositif selon l'une des revendications 1 à 9, **caractérisé par le fait que** la tige (30) comprend un tronçon de copolymère.

11. Sachet **caractérisé par le fait qu'**il comporte un dispositif de fermeture conforme à l'une des revendications 1 à 10.

## Claims

1. Device for closing bags comprising two support webs (10, 20), at least two complementary closing elements (12, 22) carried respectively by the webs (10, 20) and able to be become engaged in closed position or to be separated in open position and means (30) of a breakable connection, initially connecting the two webs (10, 20), **characterised by** the fact that the means of connection (30) are formed by a stem extruded with the two webs (10, 20) and comprising on a controlled zone a material change (32) able to define a weak zone, a pair of closing elements (12, 22) located respectively on each side of said stem.

2. Device according to claim 1, **characterised by** the fact that it is extruded ins separated position of the closing elements (12, 22), with the sections (10, 20) of the webs carrying these closing elements (12, 22) being later pivoted in order to carry the closing elements (12, 22) into engagement.

3. Device according to one of claims 1 or 2, **characterised by** the fact that the weak zone (32) is defined by the interface between two materials (31, 34; 34, 35).

4. Device according to one of claims 1 to 3, **characterised by** the fact that the weak zone (32) is defined by at least one interface of two materials (31, 34; 34, 35) having different melting points.

5. Device according to one of claims 1 to 4, **characterised by** the fact that the weak zone (32) is defined by a strip of material (34) surrounded by two sections (31, 35) of different material.

6. Device according to one of claims 1 to 5, **characterised by** the fact that the weak zone (32) is formed by a strip (34) of material having a melting point that is higher than that of sections (31, 35) surrounding this strip.

7. Device according to one of claims 1 to 6, **characterised by** the fact that the weak zone (32) is formed by a strip of material selected from the group consisting of high-density polyethylene and polypropylene.

8. Device according to one of claims 1 to 7, **characterised by** the fact that the weak zone (32) is located substantially at mid-width of the stem (30).

9. Device according to one of claims 1 to 8, **characterised by** the fact that the stem comprises a low-density polyethylene section.

10. Device according to one of claims 1 to 9, **characterised by** the fact that the stem (30) comprises a copolymer section.

11. Bag **characterised by** the fact that it comprises a device for closing in accordance with one of claims 1 to 10.

## Patentansprüche

1. Verschließvorrichtung für Beutel, welche zwei Trägersegel (10, 20), wenigstes zwei komplementäre Verschließelemente (12, 22), die jeweils auf einem Segel (10, 20) sitzen und in Schließstellung in Eingriff kommen oder in Offenstellung getrennt werden können, und brechbare Verbindungsmitteln (30) aufweist, die anfänglich die beiden Segel (10, 20) verbinden, **dadurch gekennzeichnet, dass** die Verbindungsmittel (30) durch einen mit den beiden Segeln (10, 20) in einem Stück extrudierten Schaft gebildet sind, der in einer kontrollierten Zone (32) eine für eine Definition einer Schwachzone charakteristische Änderung des Materials aufweist, wobei ein Paar von Verschließelementen (12, 22) sich auf jeder Seite des Schafts befindet.

2. Vorrichtung nach Anspruch 1, **dadurch gekennzeichnet, dass** sie in getrennter Stellung der Verschließelemente (12, 22) extrudiert ist, wobei die diese Verschließelemente (12, 22) tragenden Abschnitte (10, 20) der Segel später geschwenkt werden, um die Verschließelemente (12, 22) in Eingriff zu bringen.

3. Vorrichtung nach einem der Ansprüche 1 oder 2, **dadurch gekennzeichnet, dass** die Schwachzone (32) durch die Schnittstelle zwischen zwei Materialien (31, 34; 34, 35) definiert ist.

4. Vorrichtung nach einem der Ansprüche 1 bis 3, **dadurch gekennzeichnet, dass** die Schwachzone (32) durch wenigstens eine Schnittstelle zwischen zwei Materialien (31, 34; 34, 35) definiert ist, die unterschiedliche Schmelz/Erweichungspunkte aufweisen.

5. Vorrichtung nach einem der Ansprüche 1 bis 4, **dadurch gekennzeichnet, dass** die Schwachzone (32) durch ein Materialband (34) gebildet ist, das durch zwei Abschnitte (31, 35) unterschiedlicher Materialien eingerahmt ist.

6. Vorrichtung nach einem der Ansprüche 1 bis 5, **dadurch gekennzeichnet, dass** die Schwachzone (32) durch ein Band (34) aus einem Material gebildet ist, das einen höheren Schmelz/Erweichungspunkt als die beiden dieses Band einrahmenden Abschnitte (31, 35) aufweist.

7. Vorrichtung nach einem der Ansprüche 1 bis 6, **dadurch gekennzeichnet, dass** die Schwachzone (32) durch ein Band aus einem Material gebildet ist, das aus der Polyethylen hoher Dichte und Polypropylen aufweisenden Gruppe ausgewählt ist.

8. Vorrichtung nach einem der Ansprüche 1 bis 7, **dadurch gekennzeichnet, dass** die Schwachzone (32) im Wesentlichen auf halber Breite des Schafts (30) liegt.

9. Vorrichtung nach einem der Ansprüche 1 bis 8, **dadurch gekennzeichnet, dass** der Schaft einen Abschnitt aus Polyethylen niedriger Dichte aufweist.

10. Vorrichtung nach einem der Ansprüche 1 bis 9, **dadurch gekennzeichnet, dass** der Schaft (30) einen Abschnitt aus Copolymer aufweist.

11. Beutel, **dadurch gekennzeichnet, dass** er eine Verschließvorrichtung gemäß einem der Ansprüche 1 bis 10 aufweist.
